# EUROPÄISCHE PATENTSCHRIFT

(11) **EP 3 760 987 B1**
(45) Veröffentlichungstag und Bekanntmachung des Hinweises auf die Patenterteilung: **28.12.2022**
(21) Anmeldenummer: 19184134.5
(22) Anmeldetag: 03.07.2019
(51) Int. Cl.: G01G 19/14, G01G 19/00

(54) **VERFAHREN UND VORRICHTUNG ZUR LADUNGSÜBERWACHUNG**
METHOD AND DEVICE FOR LOAD MONITORING
PROCÉDÉ ET DISPOSITIF DE SURVEILLANCE DE CHARGEMENT

(43) Veröffentlichungstag der Anmeldung: 06.01.2021
(73) Patentinhaber: Koskisen Oy, 16600 Järvelä (FI)
(72) Erfinder: Strauch, Andreas, 26655 Westerstede (DE)
(74) Vertreter: Klickow & Wetzel PartGmbB

(56) Entgegenhaltungen:
- WO-A1-2017/179985

## Beschreibung

Die Erfindung betrifft ein Verfahren zur Ladungsüberwachung von einer auf mindestens einer Platte lagernden Ladung.

Darüber hinaus betrifft die Erfindung eine Vorrichtung zur Ladungsüberwachung.

Der Transport von Waren beispielsweise durch Logistikanbieter, wie Spediteure, erfolgt häufig auf Holzplatten. Diese Holzplatten können zum Beispiel auf dem Boden von Containern, in Frachträumen oder in Lagern angeordnet sein. Häufig bestehen die Holzplatten aus Sperrholzschichten oder anderen Laminaten.

Für einen Spediteur ist es von essentieller Bedeutung den vorhandenen Laderaum für zu transportierende Waren möglichst optimal auszunutzen und gleichzeitig die Einhaltung zulässiger Gesamtgewichte, sei dies durch die maximale Belastbarkeit einer Holzplatte, anderer mechanischer Strukturen oder durch Beschränkungen des Gewichts bestimmter Transporteinheiten gegeben, zu gewährleisten.

Die Überwachung der relevanten Parameter kann durch die Anordnung von Sensoren, insbesondere von Gewichtssensoren, im Bereich des Frachtraumes erfolgen.

Aus dem Stand der Technik sind bereits Vorrichtungen zur Ladungsüberwachung bekannt, die Sensoren zur Erfassung der Ladung aufweisen.

Die WO 2017/163 105 A1 offenbart einen Transport-Container mit einer Trägerstruktur im Bereich des Containerbodens, wobei über der Trägerstruktur Bodenplatten angeordnet sind. Auf der Trägerstruktur sind Wägezellen angeordnet, auf denen die Bodenplatten aufliegen, sodass die Masse der Bodenplatten und von ggf. auf den Bodenplatten befindlicher Ladung erfassbar ist. Weiterhin ist die Verwendung von volumetrischen Sensoren zur Erfassung des Containerinhalts offenbart.

In der US 2017 307 433 A1 ist ein Frachtcontainer mit unter Bodenplatten angeordneten Gewichtssensoren zur Erfassung der Masse der Ladung des Frachtcontainers offenbart.

Die EP 2 821 761 A1 offenbart einen Container mit einer Mehrzahl von Wägezellen, die voneinander beabstandet im Bereich des Bodens des Containers angeordnet sind. Die Wägezellen dienen der Erfassung der Masse der im jeweiligen Bereich auf den Zellen aufliegenden Ladung.

In der EP 2 261 613 A1 ist die Verwendung von Wägeeinrichtungen zur Erfassung der Masse und der Beschleunigung der Ladung eines Containers offenbart, wobei die Wägeeinrichtungen zwischen dem Boden des Containers und Bodenplatten angeordnet sind.

Aus der WO 2017/17 9985 A1 ist bereits eine Palette zum Transport von Lasten bekannt, bei der eine Auflageplatte von Standfüßen gehaltert wird. Im Bereich der Standfüße sind Tags angeordnet, die mit Gewichtssensoren ausgestattet sind. Gemäß einer weiteren Ausführungsform sind entsprechende Tags im Bereich der oberen Platte positioniert.

Eine Aufgabe der Erfindung ist es, eine verbesserte Vorrichtung zur Ladungsüberwachung anzugeben.

Diese Aufgabe wird erfindungsgemäß durch eine Vorrichtung zur Ladungsüberwachung aufweisend die Merkmale des Patentanspruchs 1 gelöst.

Die Vorrichtung zur Ladungsüberwachung ermöglicht eine Optimierung der Ladungsverteilung und/oder eine Ausnutzung eines verfügbaren Stauraumes ermöglicht.

Darüber hinaus ermöglicht die Vorrichtung zur Ladungsüberwachung eine Anbindung an Endgeräte wie beispielsweise Smartphones oder Logistikgeräte von Transportfahrzeugen.

Eine weitere Aufgabe der Erfindung ist es, ein Verfahren zur Ladungsüberwachung anzugeben, das eine verbesserte Ausnutzung des Frachtraumes ermöglicht.

Diese Aufgabe wird durch ein Verfahren aufweisend die Merkmale des Patentanspruchs 10 gelöst.

Die im Folgenden beschriebenen Merkmale sind sowohl einzeln als auch in allen ausführbaren Kombinationen Bestandteil der Erfindung.

Eine erfindungsgemäße Vorrichtung zur Ladungsüberwachung weist mindestens eine Platte auf, auf der Ladung positionierbar ist.

In einer Ausführungsform der Erfindung ist die mindestens eine Platte etwa rechteckig.

In verschiedenen Ausführungsformen der Erfindung sind die äußeren Abmessungen der mindestens einen Platte in einem Bereich von 500 mm x 500 mm bis 2500 mm x 14000 mm bei einer Stärke von 9 mm bis 60 mm gewählt.

Erfindungsgemäss weist die Platte mindestens drei Schichten auf, wobei eine innere Schicht aus einem flexiblen Material gefertigt ist und die beiden äußeren Schichten aus Holz, insbesondere mehrlagigem Holz, wie beispielsweise Sperrholz, gefertigt sind.

Die flexible Schicht ist vorzugsweise aus einem dauerflexiblen Material gefertigt.

Beispielsweise ist die flexible Schicht aus Naturkautschuk, Synthesekautschuk oder einem flexiblen Kunststoff gefertigt.

Die Schichtdicken einer aus drei Schichten aufgebauten Platte einer erfindungsgemäßen Vorrichtung zur Ladungsüberwachung beträgt in bevorzugten Ausführungsformen für die Nutzseite (Oberseite) der Platte im Falle der Verwendung von Sperrholz mindestens etwa 4,5 mm, für die flexible Schicht etwa 0,5 mm bis 4 mm und für die untere Schicht mindestens etwa 4,0 mm.

Die Gesamtstärke der Platte(n) und die Schichtdicken der einzelnen Schichten hängen von der beabsichtigten Applikation und der einhergehenden Gesamtkonstruktion sowie den zu erwartenden Gewichtsbelastungen ab.

Die Integration der Sensorik verbessert die Handhabbarkeit der mindestens einen Platte einer erfindungsgemäßen Vorrichtung zur Ladungsüberwachung im Hinblick auf die Montage und schützt darüber hinaus die Sensoren in sinnvollem Maße vor Umwelteinflüssen.

In einer bevorzugten Ausführungsform weist diese eine Mehrzahl von in die mindestens eine Platte integrierten Sensoren auf.

Erfindungsgemäss ist zumindest ein Teil der Sensoren und/oder der elektronischen Schaltung in und/oder an einer flexiblen Schicht der Platte angeordnet.

In einer besonders bevorzugten Ausführungsform der Erfindung sind alle Sensoren in oder an einer flexiblen Schicht der Platte angeordnet.

In einer bevorzugten Ausführungsform der Erfindung ist zumindest ein Teil der Sensoren als Gewichtssensoren ausgebildet.

Die Gewichtssensoren können beispielsweise als resistive, piezoresistive, kapazitive, induktive oder optische Sensoren ausgebildet sein.

Erfindungsgemäß sind bevorzugt Kraftmesswiderstände und/oder Flächen- und/oder Streifensensoren als Gewichtssensoren verwendet. Auch an die Verwendung von Dehnungsmessstreifen ist gedacht.

In einer Ausführungsform der Erfindung ist die Anordnung der Sensoren innerhalb der mindestens einen Platte an die vorgesehene Anwendung der Platte(n) angepasst. Beispielsweise erfolgt die Anordnung der Sensoren in einer Einteilung entsprechend des Ladegutes, wie zugehörigen Palettenabmessungen, Boxen, Transportgestellen oder ähnlichem.

Die Anordnung der Sensoren kann dazu in Punkt- und/oder Flächen- und/oder Gitter- und/oder Streifenform realisiert sein.

In einer bevorzugten Ausführungsform der Erfindung sind streifenförmige Gewichtssensoren verwendet.

In einer Ausführungsform der Erfindung ist zumindest ein Teil der Sensoren als gedruckte Elektronik zumindest auf einem Teil (eine Lage oder ein Bereich der Oberfläche) der flexiblen Schicht aufgebracht.

In einer Ausführungsform der Erfindung weist die flexible Schicht der Vorrichtung zur Ladungsüberwachung zumindest eine Folie, beispielsweise eine PET-Folie, eine PEN-Folie oder eine Polyimid-Folie, auf, auf die zumindest ein Teil der Sensoren als gedruckte Elektronik aufgebracht ist.

In einer Ausführungsform der Erfindung weist die Vorrichtung zur Ladungsüberwachung mindestens eine Übertragungseinheit auf.

In einer bevorzugten Ausführungsform der Erfindung ist jeweils eine Übertragungseinheit einer Platte zugeordnet.

In einer Ausführungsform der Erfindung ist die einer Platte zugeordnete Übertragungseinheit in der Platte angeordnet. Dazu kann die Übertragungseinheit beispielsweise in einer Aussparung in der Platte angeordnet sein.

In einer bevorzugten Ausführungsform der Erfindung ist die Übertragungseinheit einer Platte in dieser in einer Öffnung / Aussparung angeordnet und durch Vergießen wasserdicht fixiert.

In einer bevorzugten Ausführungsform der Erfindung ist die Übertragungseinheit auf der Rückseite bzw. Unterseite der jeweiligen Platte in einer Aussparung angeordnet.

In einer Ausführungsform der Erfindung sind die in eine Platte integrierten Sensoren mit Hilfe einer Schnittstelle mit der Übertragungseinheit verbunden, sodass die mit Hilfe der Sensoren erfassbaren Messwerte an die Übertragungseinheit übertragbar sind.

In einer Ausführungsform der Erfindung weist diese eine Auswerteeinheit auf, mit der die mit Hilfe der Sensoren erfassten Messwerte auswertbar sind.

In einer Ausführungsform der Erfindung sind die mit Hilfe der in eine Platte integrierten Sensoren erfassten Messwerte mit der der Platte zugeordneten Übertragungseinheit an die Auswerteeinheit übertragbar.

In einer Ausführungsform der Erfindung weist mindestens eine Platte mindestens eine integrierte Auswerteeinheit auf, mit der die erfassten Messwerte auswertbar sind.

In einer anderen Ausführungsform der Erfindung weist diese mindestens eine nicht in einer Platte angeordnete Auswerteeinheit auf.

In einer bevorzugten Ausführungsform der Erfindung sind die mit Hilfe der in einer Platte integrierten Sensoren erfassten Messwerte mit der der Platte zugeordneten Übertragungseinheit drahtlos an die Auswerteeinheit übertragbar.

In einer Ausführungsform der Erfindung weist diese eine Mehrzahl von Platten mit jeweils einer zugeordneten Übertragungseinheit auf, wobei die mit Hilfe der in die jeweilige Platte integrierten Sensoren erfassten Messwerte mit Hilfe der jeweils zugeordneten Übertragungseinheit an eine zentrale Auswerteeinheit übertragbar sind.

In einer weiteren Ausführungsform der Erfindung sind die den Platten zugeordneten Übertragungseinheiten gruppenweise oder insgesamt nach einem Master-Slave-Prinzip miteinander verbunden, wobei nur die Master-Übertragungseinheit(en) mit einer zentralen Auswerteeinheit kommuniziert bzw. kommunizieren und die Sensormesswerte der jeweils zugeordneten Slave-Gruppe gemeinsam mit den Messwerten des jeweiligen Masters an die Auswerteeinheit übertragen werden.

In einer anderen Ausführungsform der Erfindung weist mindestens eine der Master-Einheiten eine in die Platte integrierte Auswerteeinheit auf, mit der die Messwerte der zugeordneten Slave-Einheiten und der jeweiligen Master-Einheit auswertbar sind.

In einer bevorzugten Ausführungsform der Erfindung ist zur Auswertung der Messwerte mit Hilfe mindestens einer Auswerteeinheit mindestens eine zumindest einer Platte zugeordnete virtuelle Matrix erzeugbar, durch die die erfassten Messwerte mit dem jeweiligen Ort der Erfassung in Verbindung setzbar sind.

In einer Ausführungsform der Erfindung sind bei der Auswertung der Messwerte mit Hilfe der mindestens einen Auswerteeinheit zusätzlich die Fertigungstoleranzen und/oder die unterschiedliche Wirkung der möglichen Unterkonstruktionen auf die Messungen korrigierbar.

In einerweiteren Ausführungsform der Erfindung sind bei der Auswertung der Messwerte mit Hilfe der mindestens einen Auswerteeinheit Referenzwerte beispielsweise für den Abgleich der Sensorik mit den Gewichtsdaten bei 100 kg, 250 kg, 500 kg, 1000 kg und/oder 2000 kg verwendbar.

In einer weiteren Ausführungsform der Erfindung weist diese Sensoren zur Messung von Licht und/oder Biegung und/oder Feuchtigkeit und/oder Druck auf.

In einer weiteren Ausführungsform der Erfindung weist diese Sensoren bzw. Elektronik zur Bestimmung des Ortes der Vorrichtung oder von Teilen der Vorrichtung auf. Beispielsweise ist an die Verwendung eines Positionsbestimmungssystemes wie GPS oder Galileo gedacht.

In einer Ausführungsform der Erfindung sind die mit Hilfe der Sensoren erfassten Messdaten zur Überwachung des Transportgutes im Hinblick auf die für den Zustand des Transportgutes relevanten Parameter, wie beispielsweise Temperatur und/oder Luftfeuchtigkeit, verwendet.

In einer weiteren Ausführungsform der Erfindung weist diese im Bereich mindestens einer Platte einen RFID-Tag und/oder eine mittels RFID-Geräten auslesbare Identifikationseinheit auf.

In einer Ausführungsform der Erfindung weist die Übertragungseinheit eine Energiespeichereinrichtung auf, die zur Energieversorgung der Übertragungseinheit und/oder der in die jeweilige Platte integrierten Sensoren dient.

Die Energiespeichereinrichtung ist in einer Ausführungsform der Erfindung als ein Akku oder als eine Batterie ausgebildet.

In einer weiteren Ausführungsform der Erfindung weist diese eine Energiegewinnungsvorrichtung auf. Die Energiegewinnungsvorrichtung ist beispielsweise als eine Vorrichtung zur Energiegewinnung aus Vibrationen und/oder Druckbelastung und/oder Bewegungs- und/oder Bremsenergie und/oder Schwingungen der gesamten oder Teilen der Platte(n) bzw. gegeneinander arbeitenden Teilbereichen ausgebildet.

In einer Ausführungsform der Erfindung sind die Sensormessdaten mit Hilfe einer Auswerteeinheit auswertbar und zur Steuerung mindestens eines Be- und/oder Entladeroboters verwendbar. Basierend auf den Sensormessdaten ist ein Be- und/oder Entladeroboter derart ansteuerbar, dass eine Verteilung der Ladung auf mindestens einer Platte einer erfindungsgemäßen Vorrichtung zur Ladungsüberwachung im Hinblick auf die Ausnutzung des Laderaums / der Ladefläche und/oder im Hinblick auf die Lastverteilung auf der mindestens einen Platte und/oder die Be- oder Entladungsabfolge optimierbar ist.

In einer Ausführungsform der Erfindung sind die Sensormessdaten mit Hilfe einer Auswerteeinheit auswertbar und zur Erzeugung von Hinweisen und/oder Anweisungen für eine menschliche Be- und/oder Entladehilfe verwendbar, sodass die Verteilung der Ladung auf mindestens einer Platte einer erfindungsgemäßen Vorrichtung zur Ladungsüberwachung im Hinblick auf die Ausnutzung des Laderaums / der Ladefläche und/oder im Hinblick auf die Lastverteilung auf der mindestens einen Platte und/oder die Be- oder Entladungsabfolge optimierbar ist.

In einer Ausführungsform der Erfindung sind die mit Hilfe der mindestens einen Auswerteeinheit ermittelbaren Daten zur auf einen Sensor wirkenden Masse und der Masseverteilung auf mindestens einer Platte an mindestens ein Benutzergerät übertragbar.

In einer bevorzugten Ausführungsform der Erfindung ist mindestens ein Benutzergerät dazu ausgebildet, einem Verwender des Benutzergerätes mit Hilfe von optischen und/oder akustischen Ausgabevorrichtungen die von der Auswerteeinheit übertragbaren Daten abrufbar bereitzustellen.

In einer Ausführungsform der Erfindung sind einem Verwender eines Benutzergerätes mit Hilfe von optischen und/oder akustischen Ausgabevorrichtungen Warnmeldungen, beispielsweise bezüglich einer Überladung oder eines Verrutschens der Ladung, ausgebbar.

In einer Ausführungsform der Erfindung weist das mindestens eine Benutzergerät mindestens eine Auswerteeinheit zur Auswertung der übermittelten Sensormesswerte auf.

In einer Ausführungsform der Erfindung ist mindestens ein Benutzergerät als ein Smartphone ausgebildet. Auf dem als ein Smartphone ausgebildeten Benutzergerät ist eine Applikation installiert, mit der die Ausgabe der von der Auswerteeinheit übermittelten Daten steuerbar ist.

In einer weiteren Ausführungsform der Erfindung ist mindestens ein Benutzergerät als ein Logistikgerät, beispielsweise zur Verwendung in Transportfahrzeugen, ausgebildet.

In einer Ausführungsform der Erfindung sind mit Hilfe eines Benutzergerätes Daten an die Auswerteeinheit einer Vorrichtung zur Ladungsüberwachung übermittelbar.

Beispielsweise ist an die Übermittlung von Daten zur Kalibration des Systems, insbesondere von auf der mindestens einen Platte der Vorrichtung angeordneten Referenzgewichten, gedacht.

In einer bevorzugten Ausführungsform der Erfindung ist eine Mehrzahl von Platten, die zumindest teilweise aus Holz gefertigt sind, flächig angeordnet, sodass die Kanten der Platten relativ nah beieinander liegen. Sofern die Platten Seiten mit unterschiedlichen Längen aufweisen, liegen jeweils lange und kurze Seiten der Platten beieinander. Jede der Platten weist eine Mehrzahl von Gewichtssensoren auf, die jeweils mit einer der Platte zugeordneten Übertragungseinheit zur Übertragung der Messwerte verbunden sind. Mit Hilfe der Übertragungseinheit sind die Messdaten der Sensoren einer Platte gebündelt an eine Auswerteeinheit übertragbar, mit der die Sensormessdaten aller Platten des Systems auswertbar sind.

Ein erfindungsgemäßes Verfahren zur Ladungsüberwachung weist in einer Ausführungsform die folgenden Schritte auf:
1. Erfassung von Messdaten mit Hilfe mindestens eines Gewichtssensors in mindestens einer Platte
2. Übertragung der Messdaten des mindestens einen Gewichtssensors an eine Übertragungseinheit je Platte
3. Übermittlung der Sensormessdaten von der jeweiligen Übertragungseinheit an eine Auswerteeinheit
4. Auswertung der Sensormessdaten zur Ermittlung der Lastverteilung auf der mindestens einen Platte

In einer Ausführungsform des erfindungsgemäßen Verfahrens werden die Messdaten einer Gruppe von Gewichtssensoren in einer Platte erfasst und die Messdaten durch eine der Gruppe von Sensoren zugeordnete Übertragungseinheit an eine Auswerteeinheit übertragen.

In einer bevorzugten Ausführungsform des erfindungsgemäßen Verfahrens zur Ladungsüberwachung ist eine erfindungsgemäße Vorrichtung zur Ladungsüberwachung verwendet.

In einer weiteren Ausführungsvariante des erfindungsgemäßen Verfahrens wird die mit Hilfe der Auswerteeinheit ermittelte Masseverteilung auf mindestens einer Platte zur Erzeugung von Steuerbefehlen für mindestens einen Be- und/oder Entladeroboter verwendet.

In einer weiteren Ausführungsform des erfindungsgemäßen Verfahrens wird die mit Hilfe der Auswerteeinheit ermittelte Masseverteilung auf mindestens einer Platte zur Erzeugung von Anweisungen für mindestens einen menschlichen Be- und/oder Entladehelfer verwendet.

In einer weiteren Ausführungsform des erfindungsgemäßen Verfahrens wird die mit Hilfe der Auswerteeinheit ermittelte Masseverteilung an mindestens ein Benutzergerät übertragen, sodass die Massedaten von einem Verwender des Benutzergerätes abrufbar sind.

In einer Ausführungsform der Erfindung ist mit Hilfe der Vorrichtung zur Ladungsüberwachung ein Verrutschen der Ladung detektierbar.

In einer weiteren Ausführungsform der Erfindung ist mit Hilfe der Vorrichtung zur Ladungsüberwachung bei einem Verrutschen der Ladung ein Steuersignal generierbar und an ein Benutzergerät und/oder die Fahrzeugelektronik des die Ladung transportierenden Fahrzeugs übertragbar, sodass direkt oder indirekt eine Fahrzeugreaktion, beispielsweise ein automatisierter Bremsvorgang des Fahrzeuges, einleitbar ist.

In einer weiteren Ausführungsform der Erfindung sind mit Hilfe der Vorrichtung zur Ladungsüberwachung auf den mit Hilfe der Sensoren erfassten Gewichtsdaten der Ladung Hinweise zur Ladungssicherung für einen Belader erzeugbar und mit Hilfe eines Benutzergerätes an diesen ausgebbar.

Beispielsweise ist anhand der Masse der Ladung und ggf. zusätzlich anzugebender Parameter, wie beispielsweise dem Reibbeiwert einer unter der Ladung eingesetzten Antirutschmatte, ein Hinweis für den Belader zu erzeugen, der eine Empfehlung bezüglich der Anzahl und/oder Stärke der zur Ladungssicherung zu verwendenden Spanngurte angibt.

In einer weiteren Ausführungsform ist die Spannung der ggf. zur Ladungssicherung eingesetzten Spanngurte mit Hilfe der Sensoren der Vorrichtung zur Ladungsüberwachung überwachbar, sodass einem Belader und/oder dem Fahrer eines Transportfahrzeugs ein Hinweis über hinreichend oder unzureichend gespannte Spanngurte angebbar ist.

In einer Ausführungsform der Erfindung sind dazu ausschließlich die in der Platte oder den Platten der Vorrichtung integrierten Sensoren verwendet.

In einer weiteren Ausführungsform der Erfindung sind dazu ausschließlich oder zusätzlich außerhalb der mindestens einen Platte einer erfindungsgemäßen Vorrichtung zur Ladungsüberwachung angeordnete Sensoren verwendet.

In einer weiteren Anwendung einer erfindungsgemäßen Vorrichtung ist diese in den Boden eines Fluchtweges integriert, sodass mit Hilfe der Vorrichtung im Fluchtweg abgestellte Gegenstände detektierbar sind. Somit ist die Überwachung und Gewährleistung freier Fluchtwege ermöglicht.

In den Figuren sind beispielhafte Ausführungsformen der Erfindung dargestellt. Es zeigen:
- Figur 1:: Die Platte einer erfindungsgemäßen Vorrichtung zur Ladungsüberwachung in einer perspektivischen Ansicht von oben,
- Figur 2:: Die Platte einer erfindungsgemäßen Vorrichtung zur Ladungsüberwachung in einer perspektivischen Ansicht von unten,
- Figur 3:: Eine schematische Darstellung einer Übertragungseinheit einer erfindungsgemäßen Vorrichtung zur Ladungsüberwachung,
- Figur 4:: Einen Querschnitt einer Platte einer erfindungsgemäßen Ausführungsform einer Vorrichtung zur Ladungsüberwachung,
- Figur 5:: Ein Blockschaltbild einer erfindungsgemäßen Ausführungsform einer Vorrichtung zur Ladungsüberwachung,
- Figur 6:: Eine schematische Darstellung einer erfindungsgemäßen Ausführungsform einer Vorrichtung zur Ladungsüberwachung bei einer Verwendung mit einem Lastkraftwagen und
- Figur 7:: Ein Bockschaltbild einer erfindungsgemäßen Ausführungsform einer Vorrichtung zur Ladungsüberwachung mit einer Master-Einheit und mehreren Slave-Einheiten.

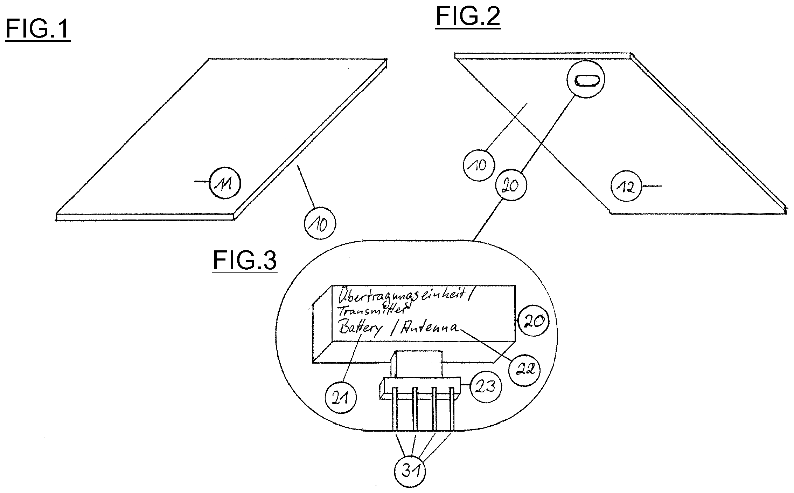

In Figur 1 ist eine Platte (10) einer erfindungsgemäßen Ausführungsform einer Vorrichtung zur Ladungsüberwachung (1) in einer perspektivischen Ansicht von oben dargestellt. Die Oberseite (11) der Platte (10) ist nicht von herkömmlichen Sperrholzplatten unterscheidbar.

Figur 2 zeigt eine perspektivische Ansicht der in Figur 1 dargestellten Platte (10) einer erfindungsgemäßen Ausführungsform einer Vorrichtung zur Ladungsüberwachung (1) in einer perspektivischen Ansicht von unten. Die Unterseite (12) der Platte (10) weist eine versiegelte Öffnung auf, in der eine Übertragungseinheit (20) angeordnet ist.

In Figur 3 ist schematisch eine Übertragungseinheit (20) einer erfindungsgemäßen Ausführungsform einer Vorrichtung zur Ladungsüberwachung (1) dargestellt. Die Übertragungseinheit (20) weist neben den benötigten Halbleiterbauelementen und der zugehörigen Peripherie eine als eine Batterie ausgebildete Energiespeichervorrichtung (21) und eine Antenne (22) auf. Zur Anbindung von Sensoren (30) weist die Übertragungseinheit (20) darüber hinaus eine Verbindungsvorrichtung (23) auf, mit der Sensoren (30) über Sensorkabel (31) mit der Übertragungseinheit (20) verbindbar sind.

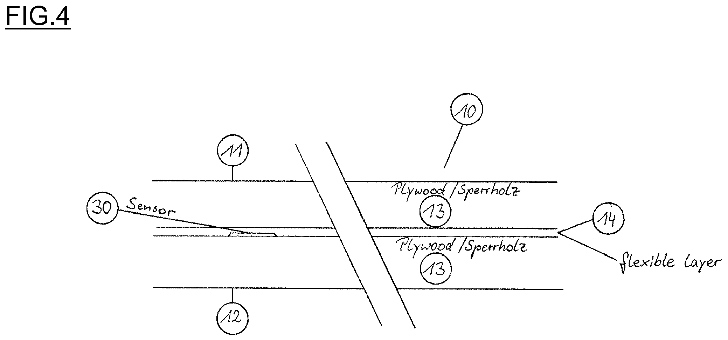

Figur 4 zeigt einen Querschnitt einer Platte (10) einer erfindungsgemäßen Ausführungsform einer Vorrichtung zur Ladungsüberwachung (1). Die Platte (10) weist drei Schichten auf, wobei die Schichten aufeinander liegen. Die obere und die untere Schicht sind als Sperrholzschichten (13) ausgebildet und die mittlere Schicht ist als eine flexible Schicht (14) ausgebildet. In der flexiblen Schicht (14) ist ein Sensor (30) angeordnet. Die Oberseite (11) der Platte (10) ist durch die außenliegende Fläche der oberen Sperrholzschicht (13) und die Unterseite (12) der Platte (10) ist durch die außenliegende Fläche der unteren Sperrholzschicht (13) realisiert. Der Sensor (30) ist auf der innenliegenden Fläche der unteren Sperrholzschicht (13) innerhalb der flexiblen Schicht (14) angeordnet.

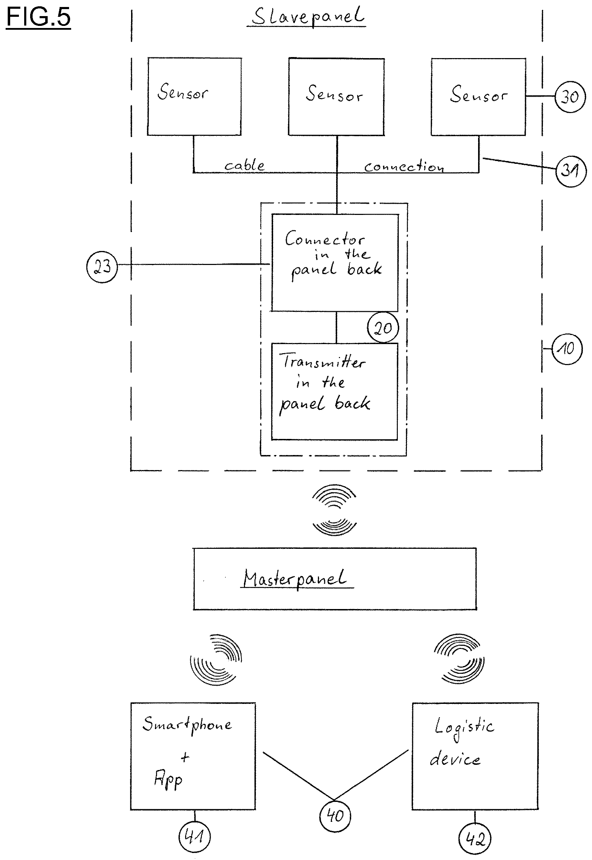

In Figur 5 ist ein Blockschaltbild einer erfindungsgemäßen Ausführungsform einer Vorrichtung zur Ladungsüberwachung (1) dargestellt. In einer Platte (10) sind drei Sensoren (30) angeordnet, die mit Hilfe von Sensorkabeln (31) über die Verbindungsvorrichtung (23), die beispielsweise durch ein Stecker- und Buchsensystem realisiert ist, mit einer Übertragungseinheit (20) verbunden sind. Mit Hilfe der Übertragungseinheit (20) sind die mit Hilfe der Sensoren (30) erfassten Messdaten an Endgeräte (40) der Vorrichtung zur Ladungsüberwachung (1) drahtlos übertragbar. In dem gezeigten Ausführungsbeispiel ist ein Endgerät (40) als ein Smartphone (41) und ein Endgerät (40) als ein Logistikgerät (42), beispielsweise das Logistikgerät (42) eines Lastkraftwagens, ausgebildet.

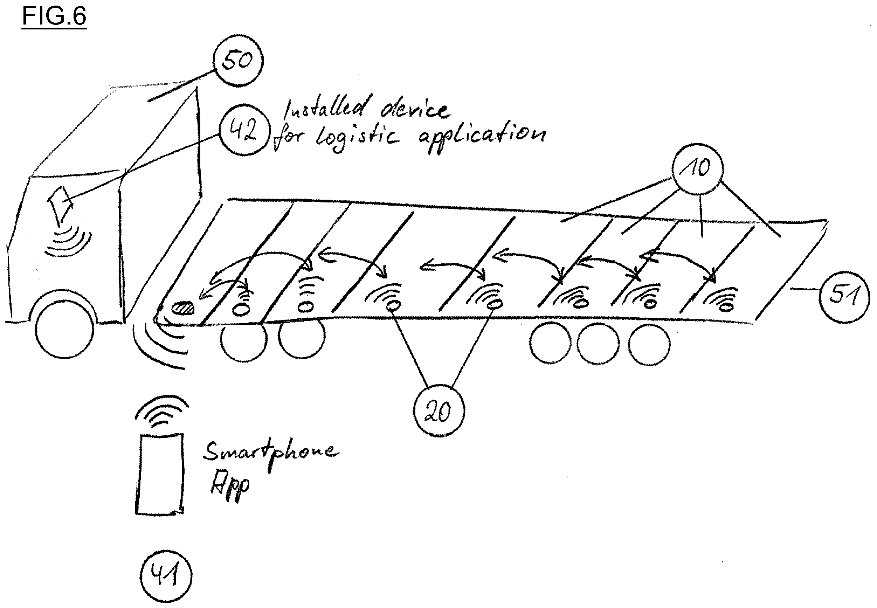

Figur 6 zeigt in einer schematischen Darstellung die Verwendung einer erfindungsgemäßen Ausführungsform einer Vorrichtung zur Ladungsüberwachung (1) mit einem Lastkraftwagen (50). Auf der Ladefläche (51) des Lastkraftwagens (50) sind acht Platten (10) angeordnet, die jeweils eine Übertragungseinheit (20) aufweisen. Mit Hilfe der Übertragungseinheiten (20) sind die mit den Sensoren (30) der jeweiligen Platte (10) erfassten Messdaten an ein Logistikgerät (42) des Lastkraftwagens (50) und/oder an ein Smartphone (41) übertragbar.

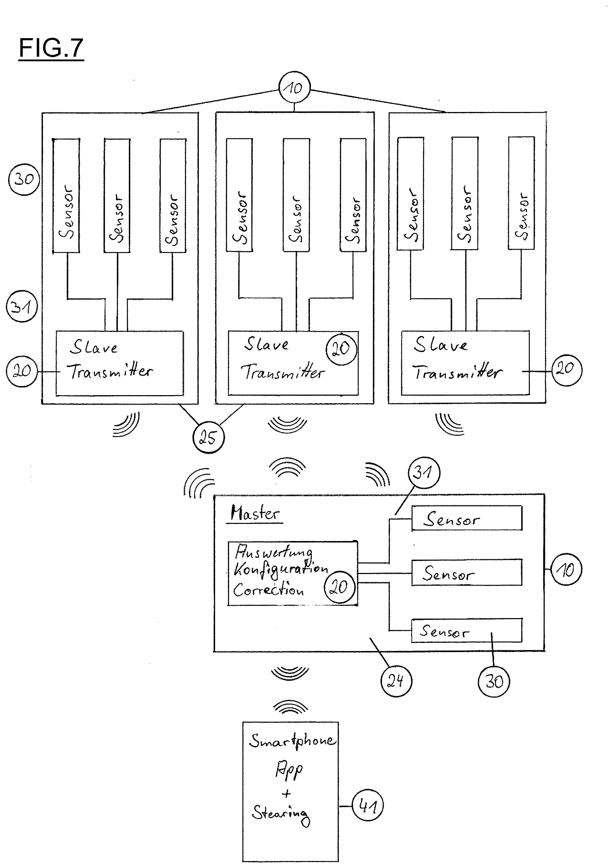

In Figur 7 ist ein Blockschaltbild einer erfindungsgemäßen Ausführungsform einer Vorrichtung zur Ladungsüberwachung (1) mit vier Platten (10) und jeweils einer Übertragungseinheit (20) dargestellt. Die Übertragungseinheit (20) einer Platte (10) ist als Master-Einheit (24) ausgebildet. Die Übertragungseinheiten (20) der übrigen Platten (10) sind als Slave-Einheiten (25) ausgebildet. Mit Hilfe der Slave-Einheiten (25) sind die mit den Sensoren (30) der jeweiligen Platte (10) erfassten Messwerte nur an die Master-Einheit (24) übertragbar. Mit Hilfe der Master-Einheit (24) sind die Messdaten der Slave-Einheiten (25) und die mit Hilfe der Sensoren (30) der Platte (10) der Master-Einheit (24) erfassten Messwerte gebündelt drahtlos an ein Endgerät (40) oder an eine Auswerteinheit übertragbar.

## Patentansprüche

1. Vorrichtung zur Ladungsüberwachung (1), aufweisend mindestens eine Platte (10), auf der eine Ladung positionierbar ist, wobei die Platte (10) eine Mehrzahl von Sensoren (30) aufweist und wobei die Sensoren (30) der Platte (10) mit einer Übertragungseinheit (20) derart elektrisch verbunden sind, dass die Sensormessdaten von den Sensoren (30) an die Übertragungseinheit (20) übertragbar sind, wobei die Messdaten der Sensoren (30) mit Hilfe der Übertragungseinheit (20) an mindestens eine Auswerteeinheit übertragbar sind, und wobei die Platte (10) eine flexible Schicht (14) aufweist, in und/oder an der mindestens einer der Sensoren (30) angeordnet ist, **dadurch gekennzeichnet, dass** die Platte (10) aus mindestens drei Schichten besteht, wobei eine innere Schicht als die flexible Schicht (14) ausgebildet ist und die beiden äußeren Schichten aus Holz gefertigt sind.

2. Vorrichtung (1) nach Anspruch 1, **dadurch gekennzeichnet, dass** die Platte (10) eine in der Platte (10) angeordnete Übertragungseinheit (20) aufweist.

3. Vorrichtung (1) nach mindestens einem der vorstehenden Ansprüche, **dadurch gekennzeichnet, dass** mindestens ein Sensor (30) der Platte (10) als Gewichtssensor ausgebildet ist.

4. Vorrichtung (1) nach mindestens einem der vorstehenden Ansprüche, **dadurch gekennzeichnet, dass** mit Hilfe der Auswerteeinheit aus den von den Sensoren (30) der Platte (10) über die Übertragungseinheit (20) an die Auswerteeinheit übertragbaren Messdaten die auf der jeweiligen Platte (10) lagernde Masse und deren Verteilung auf der Platte (10) bestimmbar ist.

5. Vorrichtung (1) nach mindestens einem der vorstehenden Ansprüche, **dadurch gekennzeichnet, dass** die Platte (10) mindestens einen Temperatursensor und/oder einen Feuchtigkeitssensor aufweist.

6. Vorrichtung (1) nach mindestens einem der vorstehenden Ansprüche, dadurchgekennzeichnet, dass die Gewichtssensoren auf einem resistiven und/oder einem optischen und/oder einem kapazitiven und/oder einem induktiven Messprinzip beruhen.

7. Vorrichtung (1) nach mindestens einem der vorstehenden Ansprüche, **dadurch gekennzeichnet, dass** mit Hilfe der durch die Auswerteeinheit ermittelten absoluten Massedaten und der ermittelten Masseverteilung mindestens ein Be- und/oder Entladeroboter derart ansteuerbar ist, dass eine verbesserte Nutzung des vorhandenen Stauraumes und/oder eine verbesserte Verteilung der Ladung realisierbar ist.

8. Vorrichtung (1) nach mindestens einem der vorstehenden Ansprüche, **dadurch gekennzeichnet, dass** mit Hilfe der durch die Auswerteeinheit ermittelten absoluten Massedaten und der ermittelten Masseverteilung Anweisungen für mindestens einen menschlichen Be- und/oder Entladehelfer erzeugbar sind, sodass eine verbesserte Nutzung des vorhandenen Stauraumes und/oder eine verbesserte Verteilung der Ladung ermöglicht ist.

9. Vorrichtung (1) nach Anspruch 7, **dadurch gekennzeichnet, dass** die mit Hilfe der Auswerteeinheit ermittelten absoluten Massedaten und die ermittelte Masseverteilung mit Hilfe einer Kommunikationseinheit von der Auswerteeinheit an ein Benutzergerät übertragbar sind, wobei das Benutzergerät (40) eine optische und/oder akustische Ausgabe aufweist, mit Hilfe der die von der Auswerteeinheit ermittelten absoluten Massedaten und die ermittelte Masseverteilung für einen Verwender des Benutzergerätes (40) abrufbar sind und/oder mit Hilfe derer eine Warnmeldung für den Verwender ausgebbar ist.

10. Verfahren zur Ladungsüberwachung, **dadurch gekennzeichnet, dass** in einem Schritt die Erfassung von Gewichtsdaten mit Hilfe von Gewichtssensoren erfolgt, dass die mit Hilfe der Gewichtssensoren erfassten Messdaten in einem Verfahrensschritt an eine einer Gruppe von Gewichtssensoren zugeordneten Übertragungseinheit übertragen werden, dass die Messdaten in einem Verfahrensschritt von der Übertragungseinheit an eine Auswerteeinheit übermittelt werden, dass die Messdaten in einem Verfahrensschritt mit Hilfe der Auswerteeinheit im Hinblick auf die auf den jeweiligen Gewichtssensor wirkende Masse ausgewertet werden und dass die Messdaten zur Ermittlung der Masseverteilung auf einer oder mehrerer Platten genutzt werden, wobei mindestens einer der Gewichtssensoren in einer flexiblen Schicht (14) der Platte (10) angeordnet wird und wobei die flexible Schicht (14) als innere Schicht in der aus mindestens drei Schichten bestehenden Platte (10) verwendet wird und die beiden äußeren Schichten aus Holz gefertigt sind.

11. Verfahren nach Anspruch 10 , **dadurch gekennzeichnet, dass** eine Vorrichtung zur Ladungsüberwachung (1) nach den Ansprüchen 1 bis 9 verwendet ist.

12. Verfahren nach einem der Ansprüche 10 oder 11, **dadurch gekennzeichnet, dass** die mit Hilfe der Auswerteeinheit ermittelte Masseverteilung auf mindestens einer Platte (10) zur Erzeugung von Steuerbefehlen für mindestens einen Be- und/oder Entladeroboter verwendet wird.

13. Verfahren nach einem der Ansprüche 10 bis 12, **dadurch gekennzeichnet, dass** die mit Hilfe der Auswerteeinheit ermittelte Masseverteilung auf mindestens einer Platte (10) zur Erzeugung von Anweisungen für mindestens einen menschlichen Be- und/oder Entladehelfer verwendet wird.

14. Verfahren nach mindestens einem der Ansprüche 10 bis 13, **dadurch gekennzeichnet, dass** die mit Hilfe der Auswerteeinheit ermittelte Masseverteilung an mindestens ein Benutzergerät (40) übertragen wird, sodass die Massedaten von einem Verwender des Benutzergerätes (40) abrufbar sind.

## Claims

1. Device for load monitoring (1), having at least one panel (10) on which a load can be positioned, wherein the panel (10) has a plurality of sensors (30) and wherein the sensors (30) of the panel (10) are electrically connected to a transmission unit (20) in such a way that the sensor measurement data can be transmitted from the sensors (30) to the transmission unit (20), wherein the measurement data from the sensors (30) can be transmitted to at least one evaluation unit with the aid of the transmission unit (20), and wherein the panel (10) has a flexible layer (14) in and/or on which at least one of the sensors (30) is arranged, **characterized in that** the panel (10) consists of at least three layers, wherein an inner layer is designed as the flexible layer (14) and the two outer layers are made of wood.

2. Device (1) according to Claim 1, **characterized in that** the panel (10) has a transmission unit (20) arranged in the panel (10).

3. Device (1) according to at least one of the preceding claims, **characterized in that** at least one sensor (30) of the panel (10) is designed as a weight sensor.

4. Device (1) according to at least one of the preceding claims, **characterized in that**, with the aid of the evaluation unit, from the measurement data that can be transmitted from the sensors (30) of the panel (10) via the transmission unit (20) to the evaluation unit, the mass resting on the respective panel (10) and the distribution thereof on the panel (10) can be determined.

5. Device (1) according to at least one of the preceding claims, **characterized in that** the panel (10) has at least one temperature sensor and/or one moisture sensor.

6. Device (1) according to at least one of the preceding claims, **characterized in that** the weight sensors are based on a resistive and/or an optical and/or a capacitive and/or an inductive measuring principle.

7. Device (1) according to at least one of the preceding claims, **characterized in that**, with the aid of the absolute mass data ascertained by the evaluation unit and the ascertained mass distribution, at least one loading and/or unloading robot can be controlled in such a way that improved use of the available storage space and/or improved distribution of the load can be realized.

8. Device (1) according to at least one of the preceding claims, **characterized in that**, with the aid of the absolute mass data ascertained by the evaluation unit and the ascertained mass distribution, instructions for at least one human loading and/or unloading assistant can be generated such that improved use of the available storage space and/or improved distribution of the load is made possible.

9. Device (1) according to Claim 7, **characterized in that** the absolute mass data ascertained with the aid of the evaluation unit and the ascertained mass distribution can be transmitted from the evaluation unit to a user device with the aid of a communication unit, wherein the user device (40) has an optical and/or acoustic output with the aid of which the absolute mass data ascertained by the evaluation unit and the ascertained mass distribution can be called up for a user of the user device (40) and/or with the aid thereof a warning message can be output for the user.

10. Method for load monitoring, **characterized in that**, in one step, weight data are detected with the aid of weight sensors, **in that**, in one method step, the measurement data detected with the aid of the weight sensors are transmitted to a transmission unit assigned to a group of weight sensors, **in that**, in one method step, the measurement data are transmitted from the transmission unit to an evaluation unit, **in that**, in one method step, the measurement data are evaluated with the aid of the evaluation unit with regard to the mass acting on the respective weight sensor and **in that** the measurement data are used for ascertaining the mass distribution on one or more panels, wherein at least one of the weight sensors is arranged in a flexible layer (14) of the panel (10) and wherein the flexible layer (14) is used as the inner layer in the panel (10) consisting of at least three layers, and the two outer layers are made of wood.

11. Method according to Claim 10, **characterized in that** a device for load monitoring (1) according to Claims 1 to 9 is used.

12. Method according to either of Claims 10 and 11, **characterized in that** the mass distribution on at least one panel (10) ascertained with the aid of the evaluation unit is used for generating control commands for at least one loading and/or unloading robot.

13. Method according to one of Claims 10 to 12, **characterized in that** the mass distribution on at least one panel (10) ascertained with the aid of the evaluation unit is used for generating instructions for at least one human loading and/or unloading assistant.

14. Method according to at least one of Claims 10 to 13, **characterized in that** the mass distribution ascertained with the aid of the evaluation unit is transmitted to at least one user device (40) such that the mass data can be called up by a user of the user device (40).

## Revendications

1. Dispositif de contrôle de charge (1), comportant au moins une plaque (10) sur laquelle peut être positionnée une charge, la plaque (10) comportant une pluralité de capteurs (30) et les capteurs (30) de la plaque (10) étant reliés électriquement à une unité de transmission (20) de manière à pouvoir transmettre les données de mesure de capteurs des capteurs (30) à l'unité de transmission (20), les données de mesure des capteurs (30) pouvant être transmises à au moins une unité d'évaluation à l'aide de l'unité de transmission (20), et la plaque (10) comportant une couche flexible (14) dans et/ou sur laquelle est disposé au moins un des capteurs (30), **caractérisé en ce que** la plaque (10) comprend au moins trois couches, une couche intérieure étant conçue comme une couche flexible (14) et les deux couches extérieures étant en bois.

2. Dispositif (1) selon la revendication 1, **caractérisé en ce que** la plaque (10) comporte une unité de transmission (20) disposée dans la plaque (10).

3. Dispositif (1) selon l'une au moins des revendications précédentes, **caractérisé en ce qu'**au moins un capteur (30) de la plaque (10) est conçu comme un capteur de poids.

4. Dispositif (1) selon l'une au moins des revendications précédentes, **caractérisé en ce que** la masse placée sur la plaque respective (10) et sa répartition sur la plaque (10) peuvent être déterminées à l'aide de l'unité d'évaluation, à partir des données de mesure pouvant être transmises par les capteurs (30) de la plaque (10) à l'unité d'évaluation par le biais de l'unité de transmission (20).

5. Dispositif (1) selon l'une au moins des revendications précédentes, **caractérisé en ce que** la plaque (10) comporte au moins un capteur de température et/ou un capteur d'humidité.

6. Dispositif (1) selon l'une au moins des revendications précédentes, **caractérisé en ce que** les capteurs de poids reposent sur un principe de mesure résistif et/ou optique et/ou capacitif et/ou inductif.

7. Dispositif (1) selon l'une au moins des revendications précédentes, **caractérisé en ce qu'**un robot de chargement et/ou de déchargement peut être commandé à l'aide des données de masse absolue déterminées par l'unité d'évaluation et de la répartition de masse déterminée de manière à pouvoir effectuer une meilleure utilisation de l'espace de stockage disponible et/ou une meilleure répartition de la charge.

8. Dispositif (1) selon l'une au moins des revendications précédentes, **caractérisé en ce que** des instructions destinées à au moins un assistant humain de chargement et/ou de déchargement peuvent être générées à l'aide des données de masse absolue déterminées par l'unité d'évaluation et de la répartition de masse déterminée de manière à permettre une meilleure utilisation de l'espace de stockage disponible et/ou une meilleure répartition de la charge.

9. Dispositif (1) selon la revendication 7, **caractérisé en ce que** les données de masse absolue déterminées à l'aide de l'unité d'évaluation et la répartition de masse déterminée peuvent être transmises de l'unité d'évaluation à un appareil d'utilisateur à l'aide d'une unité de communication, l'appareil d'utilisateur (40) comportant une sortie optique et/ou acoustique permettant à un utilisateur de l'appareil d'utilisateur (40) d'appeler les données de masse absolue déterminées par l'unité d'évaluation et la répartition de masse déterminée et/ou de délivrer un message d'avertissement à l'utilisateur.

10. Procédé de contrôle de charge, **caractérisé en ce que** l'acquisition des données de poids à l'aide de capteurs de poids est effectuée en une seule étape, **en ce que** les données de mesure acquises à l'aide des capteurs de poids sont transmises dans une étape de procédé à une unité de transmission associée à un groupe de capteurs de poids, **en ce que** les données de mesure sont transmises de l'unité de transmission à une unité d'évaluation dans une étape de procédé, **en ce que** les données de mesure sont évaluées en ce qui concerne la masse agissant sur le capteur de poids respectif dans une étape de procédé à l'aide de l'unité d'évaluation et **en ce que** les données de mesure sont utilisées pour déterminer la répartition de masse sur une ou plusieurs plaques, au moins un des capteurs de poids étant placé dans une couche flexible (14) de la plaque (10), et la couche flexible (14) étant utilisée comme couche intérieure dans la plaque (10) comprenant au moins trois couches et les deux couches extérieures étant en bois.

11. Procédé selon la revendication 10, **caractérisé en ce qu'**un dispositif de contrôle de charge (1) selon les revendications 1 à 9 est utilisé.

12. Procédé selon la revendication 10 ou 11, **caractérisé en ce que** la répartition de masse sur au moins une plaque (10), déterminée à l'aide de l'unité d'évaluation, est utilisée pour générer des ordres de commande d'au moins un robot de chargement et/ou de déchargement.

13. Procédé selon l'une des revendications 10 à 12, **caractérisé en ce que** la répartition de masse sur au moins une plaque (10), déterminée à l'aide de l'unité d'évaluation, est utilisée pour générer des instructions destinées à au moins un assistant humain au chargement et/ou au déchargement.

14. Procédé selon l'une au moins des revendications 10 à 13, **caractérisé en ce que** la répartition de masse déterminée à l'aide de l'unité d'évaluation est transmise à au moins un appareil d'utilisateur (40) de manière à permettre à un utilisateur de l'appareil d'utilisateur (40) d'appeler les données de masse.
